# EUROPEAN PATENT APPLICATION

(11) **EP 3 667 850 A1**
(43) Date of publication of application: **17.06.2020**
(21) Application number: 19214748.6
(22) Date of filing: 10.12.2019
(51) Int. Cl.: H02H 7/08, H02H 9/04, H02P 3/22, H02P 29/024

(54) **ELECTRICAL SYSTEM FOR VEHICLES HAVING OVERVOLTAGE PROTECTION**

(30) Priority: 11.12.2018 US 201816216490
(71) Applicant: Hamilton Sundstrand Corporation, Charlotte, NC 28217-4578 (US)
(72) Inventor: SPIERLING, Todd A., Rockford, IL 61109 (US)
(74) Representative: Dehns

(57) **Abstract**

An electrical system (100) for a vehicle can include a power supply (101) and one or more electric motors comprising one or more electric motor controllers (105) operatively connected to the power supply to selectively receive electrical energy from the power supply to provide electrical energy to one or more electric motors. The one or more electric motor controller can have one or more switches and operatively connected between the power supply and the one or more electric motors. The electric motor controller can be configured to modify the electrical path between the power supply and the electric motor using the one or more switches to cause at least one of a shunt to the power supply or a shunt to the electrical motor drives in an overvoltage state. The system can also include an electrical load operatively connected to the power supply. The electrical motor controller can be configured to provide overvoltage protection to the electrical load in the overvoltage state without secondary overvoltage protection circuitry between the power supply and the electrical load.

## Description

### BACKGROUND

### 1. Field

The present disclosure relates to electrical systems for vehicles, e.g., systems with overvoltage protection.

### 2. Description of Related Art

Electrical equipment is susceptible to damage if the supply voltage level exceeds a certain value. Power supply systems (e.g., generator and/or battery systems) can exceed these voltages either due to an abnormal transient operation or a failure case. Secondary, stand-alone measures are typically required to reduce the chances of a damaging occurrence. However, such secondary systems have no other function and are otherwise dead weight in normal operation.

Such conventional methods and systems have generally been considered satisfactory for their intended purpose. However, there is still a need in the art for improved electrical systems having overvoltage protection. The present disclosure provides a solution for this need.

### SUMMARY

In accordance with at least one aspect of this disclosure, an electrical system for a vehicle can include a power supply and one or more electric motors comprising one or more electric motor controllers operatively connected to the power supply to selectively receive electrical energy from the power supply to provide electrical energy to one or more electric motors. The one or more electric motor controller can have one or more switches and operatively connected between the power supply and the one or more electric motors. The electric motor controller can be configured to modify the electrical path between the power supply and the electric motor using the one or more switches to cause at least one of a shunt to the power supply or a shunt to the electrical motor drives in an overvoltage state. The system can also include an electrical load operatively connected to the power supply. The electrical motor controller can be configured to provide overvoltage protection to the electrical load in the overvoltage state without secondary overvoltage protection circuitry between the power supply and the electrical load.

The power supply can be or include a battery. In certain embodiments, the power supply can be or include a generator. The electrical energy can be high voltage DC.

The electric motor controller can include a plurality of branches connected in parallel to the power supply. In certain embodiments, each branch can include a plurality of switches. The plurality of branches include a branch for each phase of power supply. Each branch can include a phase branch connected to the branch between two switches.

The electric motor controller can be configured to close all switches on at least one branch to shunt the electrical energy to the power supply in the overvoltage state. In certain embodiments, the electric motor controller can be configured to close a first switch on a first branch and another switch on a downstream branch to shunt the electrical energy to the electrical motor drives in the overvoltage state.

In certain embodiments, the system includes an overvoltage sensor configured to sense an overvoltage from the power supply. The electric motor controller can be operatively connected to the overvoltage sensor to control the one or more switches to shunt if an overvoltage is detected. In certain embodiments, the electric motor controller can include the overvoltage sensor integrated therewith.

In certain embodiments, the vehicle can be an aircraft. For example, the electrical load can include avionics. Any other suitable vehicle type or electrical load is contemplated herein.

In accordance with at least one aspect of this disclosure, a method for providing overvoltage protection to an electrical load in a vehicle electrical system can include shunting the overvoltage, through an electric motor controller of an electric motor, from the power supply to the one or more electric motor drives of the electric motor to prevent overvoltage of the electrical load. In certain embodiments, the method can include detecting an overvoltage from a power supply before shunting the overvoltage.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic diagram of an embodiment of a system in accordance with this disclosure;
Fig. 2 is a schematic circuit diagram of an embodiment of an electric motor controller in accordance with this disclosure, shown operatively connected to a power supply and an electric motor.

### DETAILED DESCRIPTION

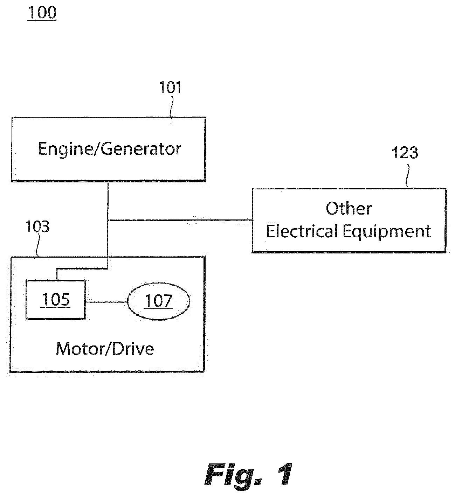

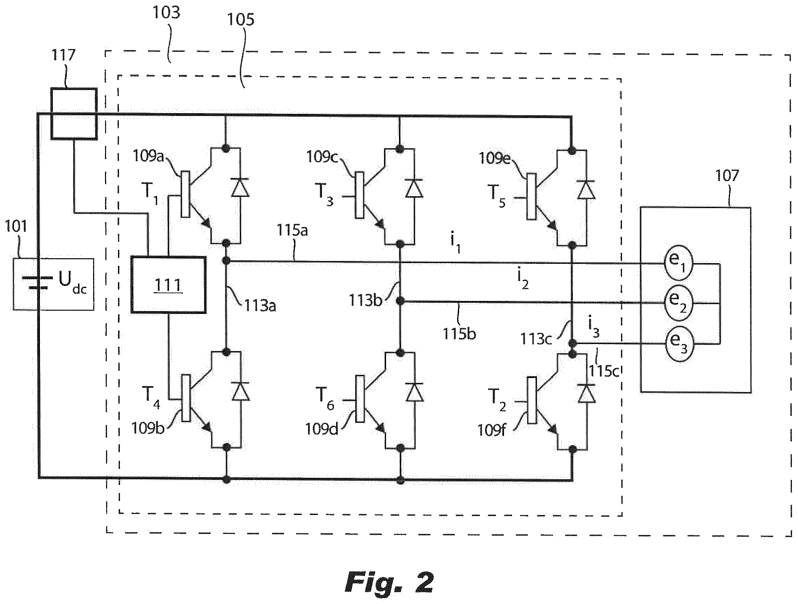

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2. The systems and methods described herein can be used to provide overvoltage protection without separate protection circuitry, thereby reducing size and/or weight of electrical systems, for example.

Referring to Fig. 1, an electrical system 100 for a vehicle (e.g., an aircraft) can include a power supply 101 and an electric motor/drive 103 operatively connected to the power supply 101 to selectively receive electrical energy from the power supply 101 to provide electrical energy to electric motor 107 (e.g., one or more electric motor controllers 105 as shown in Fig. 2).
Referring additionally to Fig. 2, the system 100 can include at least one electric motor controller 105 having one or more switches 109a, 109b, 109c, 109d, 109e, 109f and operatively connected between the power supply 101 and the electric motor 107.

The at least one electric motor controller 105 can be configured to modify the electrical path between the power supply 101 and the electric motor 107 using the one or more switches to cause at least one of a shunt to the power supply 101 or a shunt to the electrical motor 107 in an overvoltage state. The at least one electric motor controller 105 can include any suitable hardware module(s) and/or software module(s) configured to perform cause shunting to the power supply 101 and/or to the one or more electric motor 107 as disclosed herein, and/or to perform any other suitable function (e.g., normal 3-phase power supply operation).

For example, the at least one electric motor controller 105 can include a switching module 111 operatively connected to each switch 109a-109f (e.g., shown only connected to two switches for clarity). The switching module 111 can be configured to operate the one or more switches 109a-109f independently of each other, or in any suitable combinations, and/or to modulate in any suitable manner, e.g., to provide three phase power to the motor 107 in normal operation, and/or to modulate switches to direct or loop overvoltage in any suitable manner. As shown the at least one electric motor controller 105 can be integrated with the electric motor 107, or it can be separate in any suitable manner.

The system 100 can also include an electrical load 123 operatively connected to the power supply 101. The at least one electrical motor controller 105 can be configured to provide overvoltage protection to the electrical load 123 in the overvoltage state without dedicated overvoltage protection circuitry between the power supply 101 and the electrical load 123, or anywhere else on the system 100.

The power supply 101 can be or include a battery (e.g., having any suitable number and/or type of cells). In certain embodiments, the power supply 101 can be or include a generator (e.g., attached to a fuel powered motor). The electrical energy can be high voltage DC provided to the at least one electric motor controller 105.

The at least one electric motor controller 105 can include a plurality of branches 113a, 113b, 113c connected in parallel to the power supply 101. In certain embodiments, each branch 113a, b, c can include a plurality of switches 109a-f as shown. The plurality of branches 113a, b, c can each include a branch for each phase of power supply (e.g., three branches for three phase power supply). Each branch 113a, b, c can include a phase branch 115a, 115b, 115c connected to a respective branch 113a, b, c between two switches, e.g., 109a and 109b, 109c and 109d, 109e and 109f as shown.

The at least one electric motor controller 105 can be configured to close all switches on at least one branch (e.g., switches 109a and 109b on branch 113a) to shunt the electrical energy to the power supply 101 (e.g., if it is a battery) in the overvoltage state. This may cause heating of the power supply, but it can be transient and protect overvoltage to a more sensitive electrical load 123.

In certain embodiments, the at least one electric motor controller 105 can be configured to close a first switch (e.g., 109a) on a first branch (e.g., 113a) and another switch (e.g., 109f) on a downstream branch (e.g., 113c) to shunt the electrical energy to the electrical motor 107 in the overvoltage state. This may cause a small and/or brief increase in speed of the electric motor, but can prevent an overvoltage of a more sensitive electrical load 123. In certain embodiments, the electric motor 103 can include internal overvoltage circuitry to prevent damage and/or a change in speed of the motor in the overvoltage state.

In certain embodiments, the system 100 can include an overvoltage sensor 117 configured to sense an overvoltage from the power supply 101. The at least one electric motor controller 105 (e.g., the switching module) can be operatively connected to the overvoltage sensor 117 to control the one or more switches 109a-f to shunt to the power supply or the motor if an overvoltage is detected. In certain embodiments, the electric motor controller 105 can include the overvoltage sensor 117 integrated therewith.

Any other suitable switching structure and/or controller/module(s) and/or circuitry to provide overvoltage protection without dedicated overvoltage circuitry (e.g., without any other function) is contemplated herein.

In certain embodiments, the vehicle can be an aircraft. For example, the electrical load 123 can include avionics. Any other suitable vehicle type or electrical load is contemplated herein.

In accordance with at least one aspect of this disclosure, a method for providing overvoltage protection to an electrical load in a vehicle electrical system can include shunting the overvoltage, through an electric motor controller of an electric motor, to the power supply or to one or more electric motors to prevent overvoltage of the electrical load. In certain embodiments, the method can include detecting an overvoltage from a power supply before shunting the overvoltage. Any other suitable methods and/or portions thereof are contemplated herein. Also, any suitable method and/or portions thereof can be computer implemented and/or stored as computer readable instructions on any suitable medium (e.g., a non-transitory computer readable medium).

As appreciated by those having ordinary skill in the art, certain electric motors can include power electronics for the electric motor(s) to function with required high voltage current. In accordance with this disclosure, in an overvoltage state, certain embodiments can surge the motor and/or short the circuit to circulate current (e.g., which converts voltage to current) by using existing power electronics in the electric motor(s) of a system such that dedicated overvoltage protection circuitry is not needed.

Embodiments can include an overvoltage sensor (e.g., in an inverter/electric motor controller) that can look back into the system to sense overvoltage to protect other systems. Such a device can sense overvoltage and take action to protect other system, not itself for example.

Embodiments of an electrical propulsion system may include a number of motor drives (inverters) to drive the propulsion motors. Embodiments configure these motor drives to be operated as clamps to sense and limit the system voltage independent of the generation system/battery. For example, electricity for propulsion may come from a fuel engine/generator combination. System voltage must remain below a given level to prevent equipment damage, and embodiments can include large numbers of propulsion motors and associated inverters. If an abnormally high voltage is sensed (e.g., by sensor 111) from supply 101, embodiments of the inverter/motor controller 105 can either direct clamp (e.g., close switches 109a and 109b) or clamp through the motor (e.g., close switches 109e and 109f).

Accordingly, certain embodiments can include electric propulsion systems using one or more of the propulsion motor controllers (inverter) as an overvoltage protection unit to limit damaging system voltages. One or more controllers and/or any other suitable hardware and/or software modules can sense voltage behavior and act as a clamp as appropriate. Embodiments can provide additional system safety without the addition of (otherwise unused) dedicated protection devices.

As will be appreciated by those skilled in the art, aspects of the present disclosure may be embodied as a system, method, or computer program product. Accordingly, aspects of this disclosure may take the form of an entirely hardware embodiment, an entirely software embodiment (including firmware, resident software, micro-code, etc.), or an embodiment combining software and hardware aspects, all possibilities of which can be referred to herein as a "circuit," "module," or "system." A "circuit," "module," or "system" can include one or more portions of one or more separate physical hardware and/or software components that can together perform the disclosed function of the "circuit," "module," or "system", or a "circuit," "module," or "system" can be a single self-contained unit (e.g., of hardware and/or software). Furthermore, aspects of this disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device.

Program code embodied on a computer readable medium may be transmitted using any appropriate medium, including but not limited to wireless, wireline, optical fiber cable, RF, etc., or any suitable combination of the foregoing.

Computer program code for carrying out operations for aspects of this disclosure may be written in any combination of one or more programming languages, including an object oriented programming language such as Java, Smalltalk, C++ or the like and conventional procedural programming languages, such as the "C" programming language or similar programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Aspects of the this disclosure may be described above with reference to flowchart illustrations and/or block diagrams of methods, apparatus (systems) and computer program products according to embodiments of this disclosure. It will be understood that each block of any flowchart illustrations and/or block diagrams, and combinations of blocks in any flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in any flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer implemented process such that the instructions which execute on the computer or other programmable apparatus provide processes for implementing the functions/acts specified herein.

Those having ordinary skill in the art understand that any numerical values disclosed herein can be exact values or can be values within a range. Further, any terms of approximation (e.g., "about", "approximately", "around") used in this disclosure can mean the stated value within a range. For example, in certain embodiments, the range can be within (plus or minus) 20%, or within 10%, or within 5%, or within 2%, or within any other suitable percentage or number as appreciated by those having ordinary skill in the art (e.g., for known tolerance limits or error ranges).

Any suitable combination(s) of any disclosed embodiments and/or any suitable portion(s) thereof are contemplated herein as appreciated by those having ordinary skill in the art.

The embodiments of the present disclosure, as described above and shown in the drawings, provide for improvement in the art to which they pertain. While the subject disclosure includes reference to certain embodiments, those skilled in the art will readily appreciate that changes and/or modifications may be made thereto without departing from the spirit and scope of the subject disclosure.

## Claims

1. An electrical system (100) for a vehicle, comprising:
a power supply (101); and
an electric motor/drive comprising one or more electric motor controllers (105) and operatively connected to the power supply to selectively receive electrical energy from the power supply to provide electrical energy to one or more electric motors, the electric motor controller operatively connected between the power supply and the one or more electric motor drives to control input to the electric motor, the electric motor controller comprising one or more switches, wherein the electric motor controller is configured to modify the electrical path between the power supply and the electric motors using the one or more switches to cause at least one of a shunt to the power supply or a shunt to the electrical motors in an overvoltage state; and
an electrical load operatively connected to the power supply, wherein the electrical motor controller is configured to provide overvoltage protection to the electrical load in the overvoltage state without overvoltage protection circuitry between the power supply and the electrical load.

2. The system of claim 1, wherein the power supply is a battery, or wherein the power supply includes a generator.

3. The system of any preceding claim, wherein the electrical energy is high voltage DC, and/or wherein the vehicle is an aircraft, and wherein the electrical load includes avionics.

4. The system of any preceding claim, wherein the electric motor controller includes a plurality of branches connected in parallel to the power supply, each branch comprising a plurality of switches.

5. The system of claim 4, wherein the plurality of branches include a branch for each phase of power supply, and optionally
wherein each branch includes a phase branch connected to the branch between two switches.

6. The system of claim 4, wherein the electric motor controller is configured to close all switches on at least one branch to shunt the electrical energy to the power supply in the overvoltage state, or
wherein the electric motor controller is configured to close a first switch on a first branch and another switch on a downstream branch to shunt the electrical energy to the electrical motor in the overvoltage state.

7. The system of any preceding claim, wherein the system includes an overvoltage sensor configured to sense an overvoltage from the power supply, wherein the electric motor controller is operatively connected to the overvoltage sensor to control the one or more switches to shunt if an overvoltage is detected.

8. An electric motor controller configured to be operatively connected between a power supply and an electric motor to control input to the electric motor, the electric motor controller comprising:
one or more switches configured to modify the electrical path between the power supply and the electric motor to cause at least one of a shunt to the power supply or a shunt to electric motor in an overvoltage state.

9. The controller of claim 8, further comprising a plurality of branches connected in parallel to the power supply, each branch comprising a plurality of switches.

10. The controller of claim 9, wherein the plurality of branches include a branch for each phase of power supply, and optionally
wherein each branch includes a phase branch connected to the branch between two switches.

11. The controller of claim 9, wherein the electric motor controller is configured to close all switches on at least one branch to shunt the electrical energy to the power supply in the overvoltage state.

12. The controller of claim 9, wherein the electric motor controller is configured to close a first switch on a first branch and another switch on a downstream branch to shunt the electrical energy to the electrical motor in the overvoltage state.

13. The controller of any of claims 8 to 12, further comprising an overvoltage sensor configured to sense an overvoltage from the power supply, is configured to control the one or more switches to shunt if an overvoltage is detected.

14. A method for providing overvoltage protection to an electrical load in a vehicle electrical system, comprising:
shunting the overvoltage, through an electric motor controller of an electric motor, to the power supply or to the one or more electric motors to prevent overvoltage of the electrical load.

15. The method of claim 14, further comprising detecting an overvoltage from a power supply before shunting the overvoltage.
